# EUROPÄISCHE PATENTSCHRIFT

(11) **EP 3 352 056 B1**
(45) Veröffentlichungstag und Bekanntmachung des Hinweises auf die Patenterteilung: **19.02.2020**
(21) Anmeldenummer: 17203552.9
(22) Anmeldetag: 24.11.2017
(51) Int. Cl.: G06F 3/03, H05B 37/02

(54) **LICHTSTELLPULT MIT SCHIEBEREGLER**
LIGHT ADJUSTING PANEL WITH WITH REGULATOR
CONSOLE DE RÉGLAGE DE L'ÉCLAIRAGE DOTÉE D'UN CURSEUR

(30) Priorität: 18.01.2017 DE 202017100247 U
(43) Veröffentlichungstag der Anmeldung: 25.07.2018
(73) Patentinhaber: MA Lighting Technology GmbH, 97297 Waldbüttelbrunn (DE)
(72) Erfinder: ADENAU, Michael, 97082 Würzburg (DE)
(74) Vertreter: advotec.

(56) Entgegenhaltungen:
- EP-A2- 1 784 058
- WO-A1-95/12877
- DE-A1-102008 030 920
- US-B1- 9 402 291

## Beschreibung

Die Erfindung betrifft ein Lichtstellpult mit einem Konsolengehäuse und einem daran befestigten Schieberegler nach dem Oberbegriff des Anspruchs 1.

Gattungsgemäße Lichtstellpulte dienen zur Steuerung von Beleuchtungsanlagen, wie sie beispielsweise in der Art bei Konzertbühnen zum Einsatz kommen. Diese Beleuchtungsanlagen umfassen regelmäßig eine Vielzahl von Beleuchtungseinrichtungen, beispielsweise Bühnenscheinwerfer, wobei die Beleuchtungseinrichtungen vielfach auch noch für sich genommen zwischen einer Vielzahl von Beleuchtungszuständen, beispielsweise unterschiedlichen Farben, umgestellt werden können. Diese unterschiedlichen Beleuchtungszustände der jeweils an das Lichtstellpult angeschlossenen Beleuchtungseinrichtungen können durch programmierte Parameter im Beleuchtungsprogramm des Lichtstellpults gesteuert werden. Übliche Beleuchtungsanlagen können dabei bis zu mehreren Tausend Beleuchtungseinrichtungen umfassen. Um derart komplexe Beleuchtungsanlagen steuern zu können, sind die gattungsgemäßen Lichtstellpulte mit einem Digitalprozessor ausgestattet, der eine digitale Daten- und Signalverarbeitung erlaubt. Zur Speicherung der Steuerdaten ist regelmäßig ein Digitalspeicher vorgesehen, der es insbesondere ermöglicht, Beleuchtungsprogramme zu speichern bzw. zu archivieren. Zum Schutz der elektrischen und elektronischen Bauteile des Lichtstellpults sind die entsprechenden Komponenten in einem Konsolengehäuse eingebaut, das die elektrischen und elektronischen Komponenten des Lichtstellpults nach außen hin abschirmt.

Zur Programmierung des Beleuchtungsprogramms bzw. zur Steuerung des Beleuchtungsprogramms während eines Ablaufs müssen vom Bediener Bedienbefehle als Eingabewerte eingegeben werden. Dabei kann es sich beispielsweise um die Auswahl einer bestimmten Beleuchtungseinrichtung bzw. um die Einstellung eines bestimmten Parameters handeln. Für die Eingabe dieser Bedienbefehle sind an bekannten Lichtstellpulten mechanische Bedienelemente, wie Taster, Drehregler (Encoder) oder Schieberegler, vorhanden, die an der Oberseite des Konsolengehäuses in einem Bedienfeld angeordnet sind. Die den einzelnen Bedienelementen zugeordneten Bedienbefehle können dabei durch geeignete Menüumschaltungen verändert werden, um entsprechend komplexe Beleuchtungsprogramme programmieren und steuern zu können.

Insbesondere die Schieberegler sind bei der Programmierung der Beleuchtungsprogramme von großer Bedeutung. Die Schieberegler umfassen dabei einen Bedienknopf, der an der Oberseite des Lichtstellpults über das Konsolengehäuse übersteht und vom Benutzer zur Einstellung bestimmter Programmierungsparameter linear verschoben werden kann. Im Konsolengehäuse selbst ist für jeden Schieberegler dabei ein Schlitz vorgesehen, durch den der Bedienknopf an der Außenseite des Konsolengehäuses mit dem im Konsolengehäuse selbst eingebauten Schieberegler verbunden ist. Aus der US 9 402 291 B1 ist ein gattungsgemäßes Lichtstellpult bekannt, bei dem im Bedienfeld des Lichtsteuerpultes mindestens ein Schieberegler vorgesehen ist, der die Steuerung einer Beleuchtungsanlage durch lineare Verstellung eines Bedienknopfes ermöglicht.

Zur Unterstützung des Bedieners, insbesondere in abgedunkelten Umgebungen, wird in der US 9 402 291 B1 eine Beleuchtung des Bedienknopfs vorgeschlagen, indem im Gehäuse des Lichtstellpults eine Lichtquelle vorzusehen ist und das Licht durch ein lichtleitendes Element von der Lichtquelle zu einem am Bedienknopf angeordneten Lichtaustritt übertragen wird.

Bei den bekannten Lichtstellpulten werden die Schieberegler an der Innenseite der Wandung des Konsolengehäuses befestigt. Die Wandung des Konsolengehäuses kann dazu beispielsweise für jeden Schieberegler zwei Bohrungen aufweisen, durch die der Schieberegler dann auf der Innenseite der Wandung des Konsolengehäuses verschraubt werden kann. Diese Art der Befestigung der Schieberegler an der Wandung des Konsolengehäuses hat den Nachteil, dass die Wandung des Konsolengehäuses eine Vielzahl von Ausnehmungen aufweisen muss, um die Befestigung der Schieberegler an der Wandung zu ermöglichen. Derartige Ausnehmungen sind in der Wandung des Konsolengehäuses jedoch grundsätzlich unerwünscht, da sie zwingend abgedeckt werden müssen, um das Eindringen von Staub in das Innere des Konsolengehäuses zu vermeiden und außerdem für eine geeignete Optik im Bedienfeld des Konsolengehäuses zu sorgen.

Ausgehend von diesem Stand der Technik ist es deshalb Aufgabe der vorliegenden Erfindung, ein neues Lichtstellpult vorzuschlagen, dass die oben beschriebenen Probleme vermeidet.

Diese Aufgabe wird durch ein Lichtstellpult nach der Lehre des Anspruchs 1 gelöst.

Vorteilhafte Ausführungsformen der Erfindung sind Gegenstand der Unteransprüche.

Das erfindungsgemäße Lichtstellpult beruht auf dem Grundgedanken, dass zur Befestigung der Schieberegler nicht die Wandung des Konsolengehäuses, sondern zumindest eine im Inneren des Konsolengehäuses vorgesehene Elektronikplatine genutzt wird. Die Schieberegler werden dazu an der Elektronikplatine befestigt und weisen keinerlei Befestigungspunkte am Konsolengehäuse auf, so dass insbesondere Befestigungsausnehmungen zur Befestigung der Schieberegler in der Wandung des Konsolengehäuses entfallen können. Die Elektronikplatine selbst wird dann in geeigneter Weise im Inneren des Konsolengehäuses befestigt und sorgt so für eine ausreichende mechanische Befestigung der Schieberegler am Konsolengehäuse. Das Konsolengehäuse selbst weist dann lediglich noch die Schlitzungen auf, um die an der Außenseite des Konsolengehäuses anzubringenden Bedienknöpfe der Schieberegler mit dem Schieberegler selbst verbinden zu können.

Um in einfacher Weise für eine exakte und möglichst spielfreie Positionierung der Schieberegler an der Elektronikplatine sorgen zu können, weist die Elektronikplatine erfindungsgemäß zumindest eine Ausnehmung auf, in die der Schieberegler eingesetzt wird. Dabei kann entweder eine große Ausnehmung für alle Schieberegler gemeinsam oder für jeden Schieberegler einzeln eine jeweils formkomplementäre Ausnehmung vorgesehen sein. Durch den Formschluss zwischen dem Ausschnitt in der Elektronikplatine einerseits und dem Umfang des Schiebereglers andererseits wird eine exakte Positionierung des Schiebereglers an der Elektronikplatine und damit auch eine exakte Positionierung der Schieberegler im Konsolengehäuse ohne Weiteres gewährleistet.

Der Schieberegler weist zur Befestigung an der Elektronikplatine eine Befestigungslasche auf. Um die Einstecktiefe der Schieberegler bei der Montage in die Ausnehmung der Elektronikplatine so einstellen zu können, dass der Schieberegler sowohl an der Oberseite als auch an der Unterseite der Elektronikplatine ein stückweit übersteht, ist es besonders vorteilhaft, wenn die Befestigungslasche eine Kröpfung aufweist.

Im Hinblick auf die Vermeidung von Störungen des Lichtstellpults ist es als erfindungswesentlich erkannt worden, dass das Eindringen von Fremdkörpern und Staub in das Gehäuse des Schiebereglers möglichst vermieden wird. Insbesondere bei Schiebereglern, die einen Schleifkontakt beinhalten, stellt Staub nämlich eine große Gefahr für die Funktionalität des Schiebereglers dar. Um die Bewegungen eines Bedienknopfs auf einen Schleifkontakt übertragen zu können, muss das Gehäuse des Schiebereglers nämlich einen Schlitz aufweisen, der von einem Kopplungselement, das den Bedienknopf mit dem Schleifkontakt verbindet, durchgriffen wird. Um das Eindringen von Staub und Fremdkörpern in das Innere des Gehäuses des Schiebereglers möglichst zu minimieren, ist es deshalb vorgesehen, dass die vom Schlitz im Gehäuse des Schiebereglers gebildete Öffnung horizontal zur Seite des Lichtstellpults oder vertikal zum Boden des Lichtstellpults weist. Durch diese horizontale Ausrichtung bzw. die nach unten weisende Ausrichtung der Öffnung im Gehäuse des Schiebereglers wird vermieden, dass Staub und Fremdkörper unter Schwerkrafteinfluss durch die Öffnung in das Gehäuse des Schiebereglers gelangen.

In welcher Weise die mechanische Verbindung zwischen Schieberegler einerseits und Elektronikplatine andererseits realisiert wird, ist grundsätzlich beliebig. Gemäß einer bevorzugten Ausführungsform ist es vorgesehen, dass der Schieberegler an zumindest einer Stirnseite eine Befestigungslasche aufweist, mit der der Schieberegler an der Elektronikplatine befestigt werden kann. Soweit die Elektronikplatine zur Aufnahme der Schieberegler Ausnehmungen aufweist, ist es dabei vorteilhaft, wenn die Befestigungslasche seitlich über die Ausnehmung greift.

Zur Fixierung der Befestigungslaschen an der Elektronikplatine kann in der Befestigungslasche eine Ausnehmung vorgesehen werden. Auf diese Weise kann dann die Befestigungslasche bei der Montage des Schiebereglers an der Elektronikplatine in einfacher Weise angeschraubt werden.

Welche Art von Schieberegler in der erfindungsgemäßen Weise an der Elektronikplatine des Lichtstellpults befestigt wird, ist grundsätzlich beliebig. Besonders für Schieberegler mit einem elektrischen Antriebsmotor, mit dem der Schieberegler auch motorisch und dadurch fernsteuerbar antreibbar ist, ist die erfindungsgemäße Art der Befestigung von Vorteil, da diese Schieberegler eine hohe mechanische Festigkeit der Fixierung im Lichtstellpult erfordern.

Im Hinblick auf eine einfache elektrische Kontaktierung des Schiebereglers mit den anderen elektronischen Bestandteilen des Lichtstellpults ist es besonders vorteilhaft, wenn der Schieberegler einen Steckkontakt mit mehreren Kontaktelementen umfasst. Auf diesen Steckkontakt kann dann ein funktionskomplementärer Stecker aufgesteckt werden, um auf diese Weise mit einer einzigen Montagebewegung den gesamten Schieberegler elektrisch im Lichtstellpult anzuschließen.

Im Hinblick auf die elektrische Funktionalität ist es besonders vorteilhaft, wenn der Steckkontakt auf einer Elektronikplatine des Schiebereglers befestigt ist.

Soweit der Schieberegler eine Elektronikplatine mit Steckkontakt aufweist, sollte der Antriebsmotor des Schiebereglers bevorzugt über die Elektronikplatine elektrisch kontaktiert werden.

Eine Ausführungsform der Erfindung ist in den Zeichnungen schematisch dargestellt und wird nachfolgend beispielhaft erläutert.

Es zeigen:
- **Fig. 1**: ein Lichtstellpult zur Steuerung einer Beleuchtungsanlage mit mehreren Schiebereglern in Ansicht von oben;
- **Fig. 2**: eine im Inneren des Lichtstellpults gemäß Fig. 1 befestigte Elektronikplatine mit mehreren daran befestigten Schiebereglern in Ansicht von oben;
- **Fig. 3**: die Elektronikplatine mit den daran befestigten Schiebereglern in Ansicht von unten;
- **Fig. 4**: einen der Schieberegler gemäß Fig. 2 in demontiertem Zustand in perspektivischer seitlicher Ansicht;
- **Fig. 5**: den Schieberegler gemäß Fig. 4 in seitlicher Ansicht;
- **Fig. 6**: den Schieberegler gemäß Fig. 4 in Ansicht von oben;
- **Fig. 7**: den Schieberegler gemäß Fig. 4 im Querschnitt.

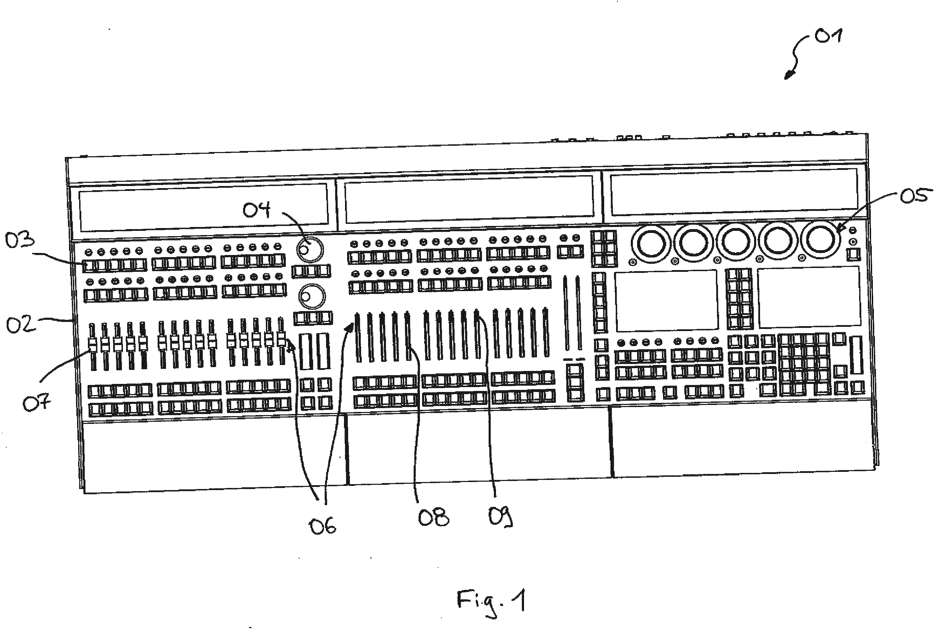

**Fig. 1** zeigt ein Lichtstellpult 01 zur Steuerung einer ansonsten nicht dargestellten Beleuchtungsanlage in Ansicht von oben. Zur Eingabe von Bedienbefehlen des Benutzers bei der Programmierung von Beleuchtungsprogrammen ist in das Konsolengehäuse 02 eine Vielzahl von mechanischen Bedienelementen wie Taster 03, Drehregler 04, Doppelwellenencoder 05 und Schieberegler 06 eingebaut. In der Darstellung gemäß Fig. 1 sind von den Schiebereglern nur die über die Oberseite des Konsolengehäuses 02 überstehenden Teile, nämlich die Bedienknöpfe 07 oder die bei Demontage der Bedienknöpfe 07 durch Schlitze 08 überstehenden Kopplungselemente 09, erkennbar.

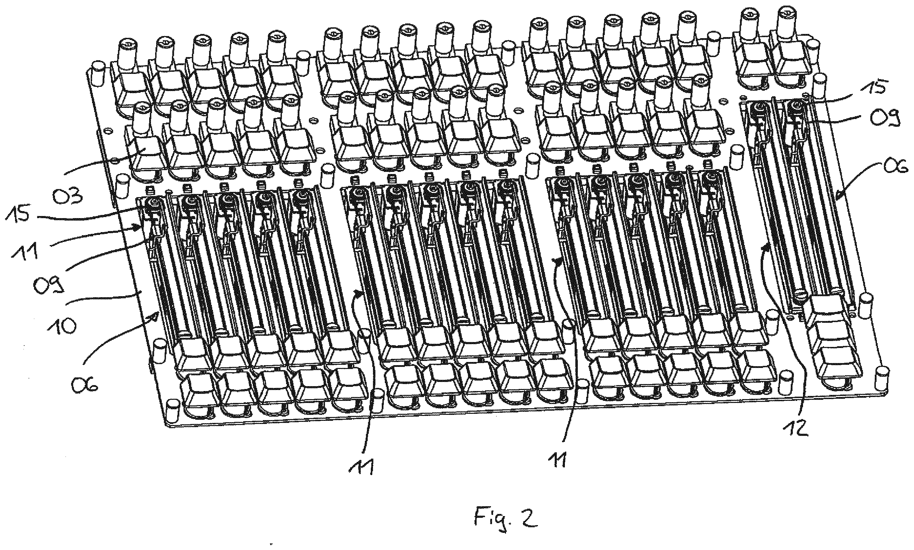

**Fig. 2** zeigt eine im Inneren des Konsolengehäuses 02 eingebaute Elektronikplatine 10, in die neben mehreren Tastern 03 auch mehrere Schieberegler 06 eingebaut sind. In der Darstellung gemäß Fig. 2 sind die Bedienknöpfe 07 demontiert und somit die Kopplungselemente 09 erkennbar.

Die Elektronikplatine 10 weist drei Ausnehmungen 11 und eine Ausnehmung 12 auf, die jeweils ein Befestigungsfeld zur Befestigung von fünf bzw. zwei Schiebereglern 06 bilden. Bei der Montage der Schieberegler 06 in den Ausnehmungen 11 bzw. 12 werden diese von unten in die Ausnehmungen 11 eingesteckt und anschließend von unten mit der Elektronikplatine verschraubt.

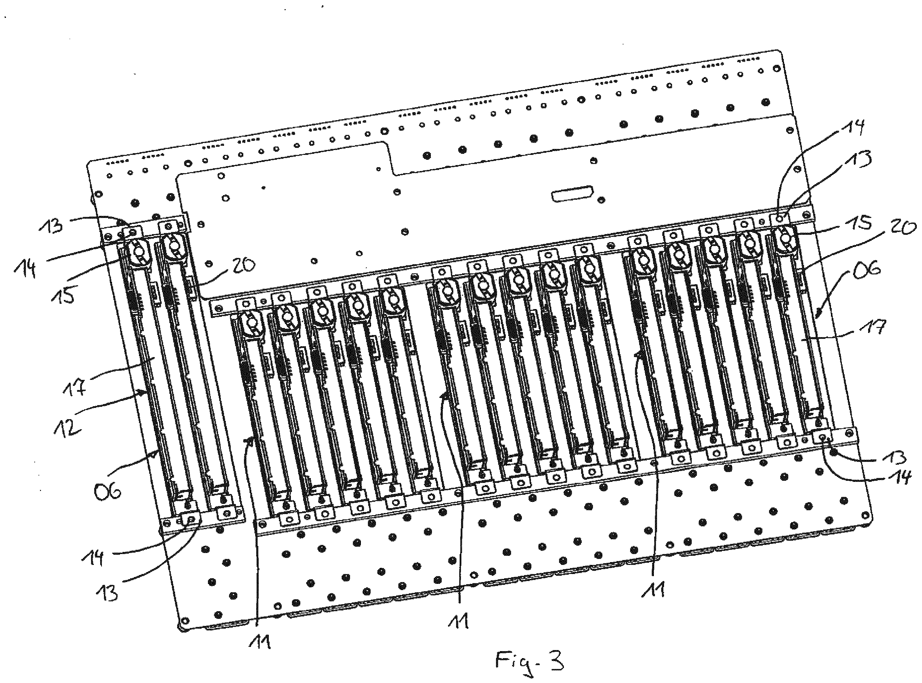

**Fig. 3** zeigt die Elektronikplatine 10 in Ansicht von unten. Man erkennt die Ausnehmungen 11 bzw. 12 mit den jeweils darin durchgesteckten Schiebereglern 06. Zur Befestigung der Schieberegler 06 an der Elektronikplatine 10 dienen Befestigungslaschen 13, die jeweils stirnseitig an den Schiebereglern 06 angeordnet sind. Jede Befestigungslasche 13 weist dabei eine Ausnehmung 14 auf, um die Schieberegler 06 mit der Elektronikplatine 10 verschrauben zu können.

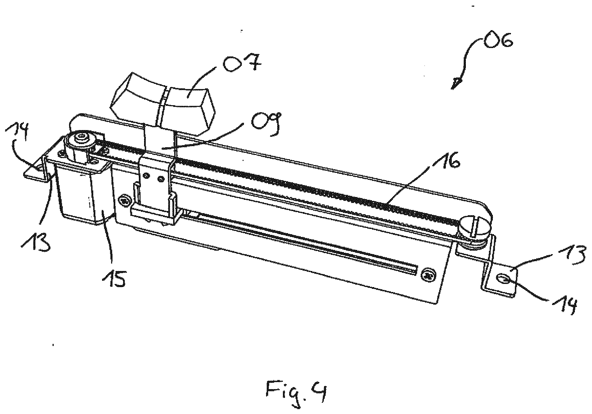

**Fig. 4** zeigt einen Schieberegler 06 mit dem auf das Kopplungselement 09 aufgesteckten Bedienknopf 07 in perspektivischer Ansicht. Man erkennt die beiden stirnseitig angeordneten Befestigungslaschen 13 mit den Ausnehmungen 14. Durch eine entsprechende Kröpfung der Befestigungslaschen 13 wird erreicht, dass bei der Montage der Schieberegler 06 an der Elektronikplatine 10 ein entsprechender Überstand des Schiebereglers 06 sowohl an der Oberseite als auch an der Unterseite der Elektronikplatine 10 erreicht wird.

Der Schieberegler 06 ist mit einem Antriebsmotor 15 ausgestattet, der über einen Antriebsriemen 16 das Kopplungselement 09 antreiben kann. Auf diese Weise kann der Schieberegler 06 nicht nur manuell verstellt werden, sondern auch durch Fernsteuerung des Antriebsmotors 15.

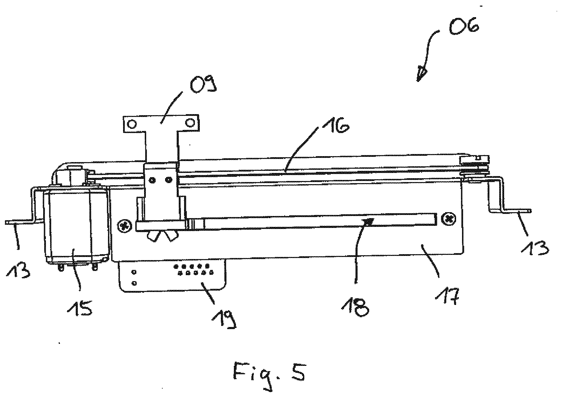

**Fig. 5** zeigt den Schieberegler 06 bei abgenommenem Bedienknopf 07 in seitlicher Ansicht. Das Gehäuse 17 des Schiebereglers 06 weist einen Schlitz 18 auf, der vom Kopplungselement 09 von außen her durchgriffen wird, um auf diese Weise das im Inneren des Gehäuses 17 angeordnete Schleifelement mit dem außerhalb des Gehäuses 17 verlaufenden Teil des Kopplungselements 09 und insbesondere auch mit dem Bedienknopf 07 verbinden zu können. Die elektronischen Bauteile des Schiebereglers 06 sind auf einer Elektronikplatine 19 verbaut.

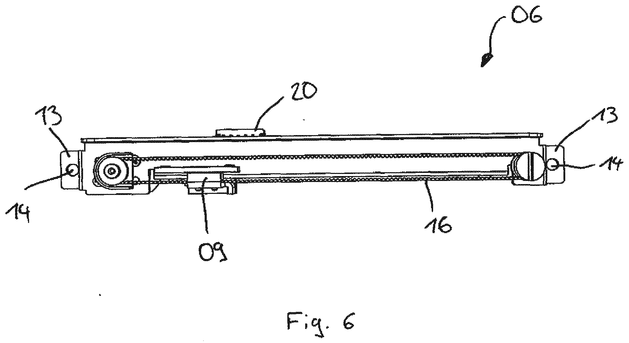

**Fig. 6** zeigt den Schieberegler 06 in Ansicht von oben. Man erkennt an der Seite des Schiebereglers 06 einen Steckkontakt 20, auf den ein funktionskomplementärer Stecker zur elektrischen Kontaktierung des Schiebereglers 06 im Lichtstellpult 01 aufgesteckt werden kann. Der Stecckontakt 20 ist auf der Elektronikplatine 19 verbaut.

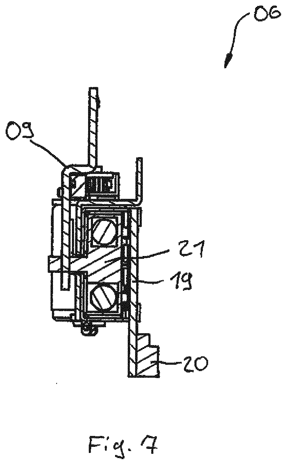

**Fig. 7** zeigt den Schieberegler 06 im Querschnitt. Man erkennt das Kopplungselement 09 und den im Inneren des Gehäuses 17 eingebauten Schleifkontakt 21. Der Schleifkontakt 21 ist ebenfalls über die Elektronikplatine 19 kontaktiert und kann vermittelt über den Steckkontakt 20 mit der Elektronik des Lichtstellpults 01 verbunden werden.

## Patentansprüche

1. Lichtstellpult (01) zur Steuerung einer Beleuchtungsanlage, wobei im Lichtstellpult (01) digitale Stellbefehle erzeugt werden, die über Datenverbindungen an die Beleuchtungseinrichtungen der Beleuchtungsanlage übertragen werden können, wobei das Lichtstellpult (01) zumindest einen Digitalprozessor und zumindest einen Digitalspeicher zur Erzeugung, Verwaltung und Speicherung der Stellbefehle umfasst, und wobei der Digitalprozessor und der Digitalspeicher in einem Konsolengehäuse (02) angeordnet sind, und wobei das Lichtstellpult (01) zumindest einen Schieberegler (06) umfasst, an dem vom Benutzer durch lineare Verschiebung eines über die Oberseite des Konsolengehäuses (02) überstehenden Bedienknopfs (07) Bedienbefehle eingegeben werden können, und wobei die Oberseite des Konsolengehäuses (02) für jeden Schieberegler (06) einen Schlitz aufweist, durch den der Bedienknopf mit dem Schieberegler verbunden ist,
**dadurch gekennzeichnet,**
**dass** im Konsolengehäuse (02) zumindest eine Elektronikplatine (10) am Konsolengehäuse (02) befestigt ist, wobei der Schieberegler (06) an zumindest einer Stirnseite mit einer Befestigungslasche (13) an der Elektronikplatine (10) befestigt ist und keinen Befestigungspunkt am Konsolengehäuse (02) aufweist, und wobei die Befestigungslasche (13) eine Kröpfung aufweist, und wobei die Elektronikplatine (10) zumindest eine Ausnehmung (11, 12) aufweist, in der der Schieberegler (06) eingesetzt ist, und wobei im Gehäuse (17) des Schiebereglers (06) ein Schleifkontakt (21) vorgesehen ist, wobei das Gehäuse (17) des Schiebereglers (06) einen Schlitz (18) aufweist, der von einem Kopplungselement (09), das den Bedienknopf (07) mit dem Schleifkontakt (21) verbindet, durchgriffen wird, und wobei die vom Schlitz (18) im Gehäuse (17) des Schiebereglers (06) gebildete Öffnung horizontal zur Seite des Lichtstellpults (01) oder vertikal zum Boden des Lichtstellpults weist.

2. Lichtstellpult nach Anspruch 1, **dadurch gekennzeichnet,**
**dass** die Befestigungslasche (13) eine Ausnehmung (14) aufweist, mit der der Schieberegler (06) an der Elektronikplatine (10) angeschraubt werden kann.

3. Lichtstellpult nach einem der Ansprüche 1 bis 2, **dadurch gekennzeichnet,**
**dass** am Schieberegler (06) ein elektrischer Antriebsmotor (15) vorgesehen ist, mit dem der Schieberegler (15) motorisch antreibbar ist.

4. Lichtstellpult nach einem der Ansprüche 1 bis 3, **dadurch gekennzeichnet,**
**dass** der Schieberegler (06) einen Steckkontakt (20) mit mehreren Kontaktelementen umfasst, an dem ein funktionskomplementärer Stecker zur elektrischen Kontaktierung des Schiebereglers (06) mit dem Lichtstellpult (01) aufgesteckt werden kann.

5. Lichtstellpult nach Anspruch 4, **dadurch gekennzeichnet,**
**dass** der Steckkontakt (20) auf einer Elektronikplatine (19) des Schiebereglers (06) befestigt ist.

6. Lichtstellpult nach einem der Ansprüche 1 bis 5, **dadurch gekennzeichnet,**
**dass** der Antriebsmotor (15) zur elektrischen Kontaktierung mit der Elektronikplatine (10) des Schiebereglers (06) verbunden ist.

## Claims

1. A lighting control console (01) for controlling a lighting system, digital adjusting commands being generated in the lighting control console (01), said adjusting commands being transmitted to the lighting devices of the lighting system via data links, said lighting control console (01) comprising at least one digital processor and at least one digital memory for generating, managing and storing the adjusting commands, and said digital processor and said digital memory being arranged in a console housing (02), and said lighting control console (01) comprising at least one slide control (06) at which operating commands are input by the user via linear displacement of a control knob (07) protruding from the upper side of the console housing (02), and said upper side of the console housing (02) comprising a slit for each slide control (06), said control knob being connected to said slide control (06) via said slit,
**characterised in that**
at least one electronic circuit board (10) is fastened to the console housing (02), the slide control (06) being fastened to said electronic circuit board (10) by means of a fastening tab (13) at least on a front side and not having any fastening point on the console housing (02), and the fastening tab (13) comprising an offset, and the electronic circuit board (10) comprising at least one hole (11, 12) in which the slide control (06) is inserted, and a sliding contact (21) being provided in the housing (17) of the slide control (06), the housing (17) of the slide control (06) comprising a slit (18) through which a coupling element (09) is passed, said coupling element connecting the control knob (07) to the sliding contact (21), the opening, which is formed in the housing (17) of the slide control (06) by the slit (18), being oriented horizontally to the side of the lighting control console (01) or vertically to the bottom of the lighting control console.

2. The lighting control console according to claim 1,
**characterised in that**
the fastening tab (13) comprises a hole (14) via which the slide control (06) is screwed onto the electronic circuit board (10).

3. The lighting control console according to any one of the claims 1 to 2,
**characterised in that**
an electric drive motor (15) is provided at the slide control (06), by means of which (15) the slide control (06) is motor-driven.

4. The lighting control console according to any one of the claims 1 to 3,
**characterised in that**
the slide control (06) comprises a plug contact (20) having several contact elements, a plug complementary in function being plugged onto said plug contact (20) for electrically contacting the slide control (06) to the lighting control console (01).

5. The lighting control console according to claim 4,
**characterised in that**
the plug contact (20) is fastened on an electronic circuit board (19) of the slide control (06).

6. The lighting control console according to any one of the claims 1 to 5,
**characterised in that**
the drive motor (15) is connected to the electronic circuit board (10) of the slide control (06) for producing an electric contact.

## Revendications

1. Pupitre (01) de commande d'éclairage pour commander un système d'éclairage, des commandes de réglage numériques étant générées dans le pupitre (01) de commande d'éclairage qui sont transmises aux dispositifs d'éclairage du système d'éclairage par des liaisons de données, le pupitre (01) de commande d'éclairage ayant au moins un processeur numérique et au moins une mémoire numérique pour la génération, la gestion et le stockage des commandes de réglage, le processeur numérique et la mémoire numérique étant disposés dans un boîtier (02) de console, le pupitre (01) de commande d'éclairage ayant au moins un curseur (06) auquel des commandes sont entrées par l'utilisateur par un déplacement linéaire d'un bouton (07) de commande faisant saillie au-dessus du côté supérieur du boîtier (02) de console, le côté supérieur du boîtier (02) de console comprenant une fente pour chaque curseur (06), au moyen de laquelle le bouton de commande est relié au curseur,
**caractérisé en ce qu'**
au moins une carte (10) électronique est fixée au boîtier (02) de console, le curseur (06) étant fixé à la carte (10) électronique à au moins un côté frontal au moyen d'une languette (13) de fixation et n'ayant pas de point de fixation au boîtier (02) de console, la languette (13) de fixation comprenant une coudure, et la carte (10) électronique comprenant au moins un évidement (11, 12) dans lequel le curseur (06) est inséré, et un contact (21) glissant étant prévu dans le boîtier (17) du curseur (06), le boîtier (17) du curseur (06) comprenant une fente (18) qui est traversée par un élément (09) de couplage reliant le bouton (07) de commande au contact (21) glissant, l'ouverture formée dans le boîtier (17) du curseur (06) par la fente (18) étant orientée horizontalement vers le côté du pupitre (01) de commande d'éclairage ou verticalement vers le fond du pupitre de commande d'éclairage.

2. Pupitre de commande d'éclairage selon la revendication 1,
**caractérisé en ce que**
la languette (13) de fixation comprend un évidement (14) au moyen duquel le curseur (06) est vissé à la carte (10) électronique.

3. Pupitre de commande d'éclairage selon l'une des revendication 1 à 2,
**caractérisé en ce qu'**
un moteur (15) d'entraînement électrique est prévu au curseur (06), au moyen duquel le curseur (06) est entraîné par moteur.

4. Pupitre de commande d'éclairage selon l'une des revendications 1 à 3,
**caractérisé en ce que**
le curseur (06) comprend un contact (20) à fiches ayant plusieurs éléments de contact, une fiche complémentaire en fonction étant enfichée au contact (20) à fiches pour la mise en contact électrique du curseur (06) avec le pupitre (01) de commande d'éclairage.

5. Pupitre de commande d'éclairage selon la revendication 4,
**caractérisé en ce que**
le contact (20) à fiches est fixé sur une carte (19) électronique du curseur (06).

6. Pupitre de commande d'éclairage selon l'une des revendications 1 à 5,
**caractérisé en ce que**
le moteur (15) d'entraînement est relié à la carte (10) électronique du curseur (06) pour établir un contact électrique.
